Europäisches Patentamt

European Patent Office

Office européen des brevets

(19)

(11) Publication number: **0 150 575**
**B1**

(12) **EUROPEAN PATENT SPECIFICATION**

(45) Date of publication of patent specification: **05.04.89**

(21) Application number: **84307842.9**

(22) Date of filing: **13.11.84**

(51) Int. Cl.⁴: **F 04 B 7/06, F 16 J 15/40, D 21 F 3/02**

(54) Pump and system employing said pump.

(30) Priority: **14.11.83 US 551447**

(43) Date of publication of application:
**07.08.85 Bulletin 85/32**

(45) Publication of the grant of the patent:
**05.04.89 Bulletin 89/14**

(84) Designated Contracting States:
**AT BE CH DE FR GB IT LI LU NL SE**

(56) References cited:
**BE-A- 852 904**
**FR-A-2 044 936**

(73) Proprietor: **M & T CHEMICALS, INC.**
**One Woodbridge Center**
**Woodbridge, New Jersey 07095 (US)**

(72) Inventor: **Thackston, Guthrie Roger**
**1628 Colony Road**
**Pasadena Maryland 21222 (US)**

(74) Representative: **Ellis, John Clifford Holgate et al**
**MEWBURN ELLIS & CO. 2/3 Cursitor Street**
**London EC4A 1BQ (GB)**

Courier Press, Leamington Spa, England.

## Description

This invention relates to a positive displacement pump for delivering small quantities of liquids to an application device and more particularly to a fluid application system using a reciprocating positive displacement pump and to the protection of components of the pump from adverse interaction with the fluid.

One representative pump as well as a discussion of other prior art pumps is found in pending international patent Application No. WO 83/04242.

The pump described there overcomes many of the prior art problems, such as the previously encountered inability to deliver consistant levels of material at very low flow rates. It has been found, however, that it is preferable to use a pump which is free of diaphragms due to either the adverse interaction between the fluid being pumped and the material of the diaphragm or possibility due to the diaphragm material exhibiting a use related characteristic variation.

It has been found that the problems of the prior art can be overcome through the use of a system which includes a specific pump structure and safety mechanisms.

In accordance with the instant invention, a system is provided which includes a positive displacement pump for producing uniform pulses of small quantities of said fluid. The pump has a piston housing with an elongated bore extending from a first open end to a position proximate a second closed end and a pumping chamber region at said second end. The pumping chamber is provided with a pumping fluid inlet and a pumping fluid outlet. A reciprocating and rotating piston, is positioned for rotational and reciprocating motion within said elongated bore of said piston housing, from a first position in which said piston substantially occupies the space within said pumping chamber and displaces pumping fluid from said pumping chamber to a second position in which said piston is substantially removed from said pumping chamber and draws pumping fluid into said chamber. A barrier fluid inlet means is provided at a position which is between said elongated bore first end and said pumping chamber and adjacent said piston. Barrier fluid is delivered to the elongated bore at a pressure which is greater than the maximum fluid pressure within said pumping chamber, in order to produce a positive pressure differential which precludes migration of pumping fluid from said pumping chamber, along the piston, to said first open end.

A positive displacement pump is described in FR—A—2044936 in which the material being conveyed (in that case a synthetic resin-filler mixture) is prevented from migration along the cylinder wall between the cylinder wall and the piston, by an annular recess filled with sealing agent based on the synthetic resin being conveyed, this recess being replenished by including the part of the recess remote from the pumping chamber in a circuit for the sealing agent which is pumped round the circuit at a pressure exceeding that of the synthetic resin and filler being pumped.

In the pump of the present invention on the other hand any conduit leading into the elongated bore and carrying barrier fluid is an inlet for barrier fluid and no seal lies between said inlet or inlets and the pumping chamber.

In another aspect of the invention, the pump of the present invention is incorporated in an apparatus for delivering controlled quantities of steady stream of fluid. This apparatus further incorporates a mixing chamber for mixing pumped fluid with air. The mixture is delivered to an application zone through an elongated restricted flow conduit, whereby said fluid and said air transform from a pulsed flow at said flow conduit first and to a steady flow at said second end.

The object and advantages of the invention will become more apparent and more readily understood when the following detailed description of the invention is read in conjunction with the drawings wherein:

Figure 1 is a schematic side view of a fluid delivery system in accordance with the present invention;

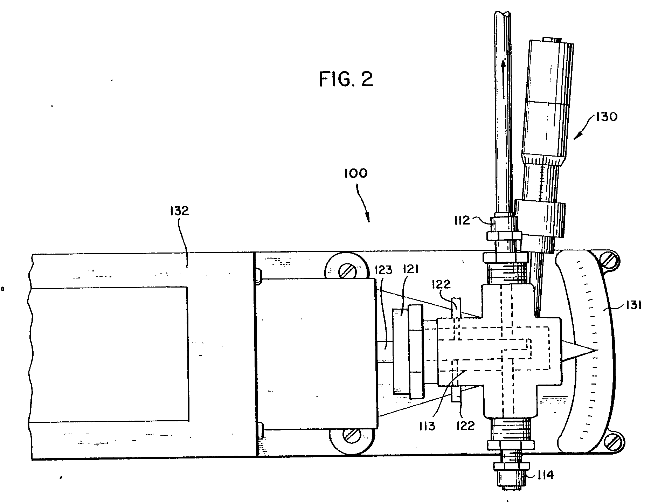

Figure 2 is an enlarged view, partly in section, of the pump of Figure 1;

Figure 3 is a detailed, fragmentary view of the internal mechanism of the pump of Figure 2;

Figure 4 is a schematic cross-sectional view of the device of Figure 3 taken along the plane of lines 4—4 of Figure 5;

Figure 5 is a fragmentary view of the device of Figure 3, showing the piston in the upper portion of its stroke;

Figure 6 is a schematic cross-sectional view of the device of Figure 3 taken along the plane of lines 6—6 of Figure 7, showing the piston at the bottom of its stroke;

Figure 7 is a fragmentary view of the device of Figure 3, showing the piston at the bottom of its stroke;

Figure 8 is a schematic cross-sectional view of the device of Figure 3 taken along the plane of lines 9—9 of Figure 9, showing the piston at the top of its stroke; and

Figure 9 is a fragmentary view of the device of Figure 3, showing the piston at the top of its stroke.

The device of the present invention is a system for delivering small quantities of a fluid to an application device in which the fluid is applied to a substrate. In one particular embodiment, the system can be in accordance with the teachings of United States patents 4,389,234 and 4,144,362, the subject matter of which is incorporated herein by reference.

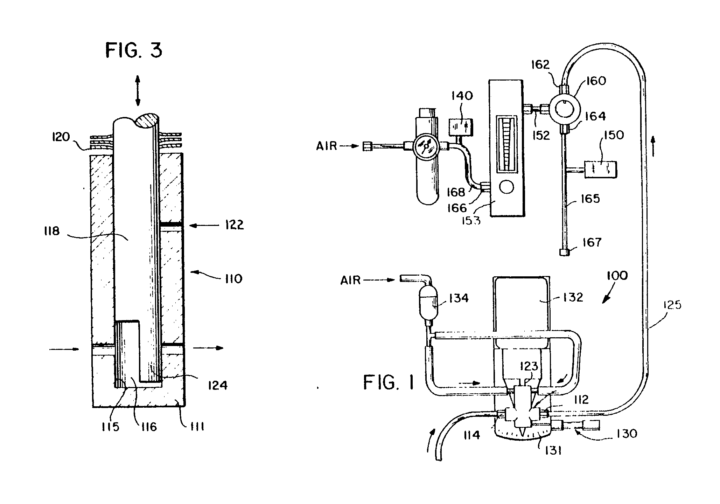

Figure 1 illustrates the overall mechanism which is employed in the present invention. The delivery system includes a pump 100 which transfers the fluid, such as a monobutyltin trichloride containing formulation, to the sight glass, in which it is mixed with air. The air is delivered to an inlet 152 of the sight glass 160 from a source, not shown, at a pressure which is regulated as well known in the art. If the air pressure falls below a critical lower limit, the air flow sensor 140 shuts off the pump 100 until the required air flow is resumed. It should be noted that the sensor can be positioned upstream or down stream of the rotameter.

The mixing of the air and the fluid in the sight glass 160 is critical, since the pump 100 delivers a pulsed fluid flow, and the fluid delivered to the hood or other fluid application device must be uniform. The mixed air and fluid flowing through outlet 164 in sight glass combined fluid conduit 165 achieves the level of homogeneity which is required at the ultimate point of fluid application.

The fluid flow rate is exactly regulated by means of flow rate adjustment mechanism 130 which can be micrometer or other mechanism as well known in the art.

The pump 100 is provided with a scale 131 which enables the user to set the system at predetermined flow rates. The fluid from the storage drum oir other container, not shown, enters the pump 100 through the inlet means 114. The pumped fluid exists through the outlet means 112 and is delivered through the conduit 125 to the inlet 162 of the sight glass 160. Dry air is delivered to the rotameter from a source, not shown, through a conduit 168, to the rotameter inlet 166. To assure that the pump is in operation only as long as there is a supply of air being delivered at the requisite pressure to the rotameter 153, a pressure sensor 140 can be provided, at previously noted. The sensor activates a transducer which assures the pump 100 is ON only in conjunction with air. A further safety device which can be provided, is an alarm activating sensor 150 which responds to excessive pressure in outlet conduit 165, as could occur when air dryer malfunction at air source allows moisture to enter the system and react with the pumped fluid, clogging conduit 165 with solid hydrolysis product.

The air-fluid mixture is delivered through the conduit 165, to an application device such as a glass coating hood, not shown. The connector 167 is employed for delivering the combined fluid to the application hood inlet or to any other desired device.

It is seen that system must be capable of delivering controlled quantities of a steady stream of the fluid to the application zone. However, the positive displacement reciprocating pump produces uniform pulses of small quantities of the fluid. The sight glass 160 serves as a mixing chamber for the air and the fluid but does not serve to eliminate the pulsed flow of the pump. The elongated, restricted flow conduit 165, having one end in communication with the mixing chamber outlet and its other end in communication with said fluid application zone, serves to transform the mixed fluid-air fluid from a pulsed flow to a steady flow. The function of the air is predominantly as a carrier and diluent for the fluid and to provide sufficient total fluid volume that a steady state flow can be realized.

It has been found that in the pumping of organotin halide formulations for use in the coating of glass, the design of the pump is extremely critical due to the reactivity of the fluid, particularly with moist air, the extremely low flow rates involved and the tendency of the fluid and/or mixture of air and fluid to behave in unpredictable ways and for reasons which are not readily evident.

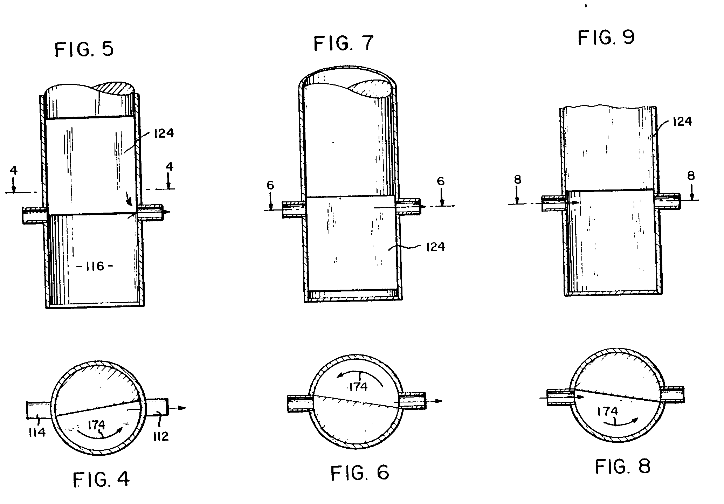

The ability to achieve long term, reliable pumping of fluid as required in the system disclosed in United States Patent 4,389,234 has been difficult to achieve. The use of a pump which does not require diaphragms or typical valves, has been found to overcome the problems encountered with numerous prior art and innovative pumps. However, the pump, as illustrated in Figure 1 and Figure 3, exhibited a shortcoming not typically encountered with other pumps. The combination of the desirable features of other pumps and the absence of problems of the prior art pumps and pumps of the type illustrated in Figure 3, that is, an optimum device, was achieved by means of providing the pump 100 with a fluid barrier between the pumping chamber 116 and the seal rings 120.

Looking now to the operation of the pump in detail, it is seen that the pump 100 is provided with a body portion or housing 111. Within the pump body portion 113, is a piston assembly, indicated generally as 110. The assembly 110 includes a housing member 111 which is made of a corrosion resistant, high durability material capable of being machined, milled or otherwise provided with high tolerance surfaces for mating with the reciprocating piston 118. Even with the closest of tolerance between the reciprocating piston 118 and the interior cylindrical walls 115 of the piston housing 111, a minute quantity of the fluid which is being pumped can migrate from the pumping chamber to the seal rings 120. Where the fluid is a corrosive material such as a monobutyltin trichloride containing formulation, the minute migration of fluid causes the failure over an unpredictable period of time of the seal rings 120, which are typically made of a material such as polytetrafluoroethylene or a synthetic rubber. The failure can be due to solvent interaction with the seal material or abrasion of the seals by particles which form on the outside of the pump housing, adjacent the closure 121. The quantity of fluid leakage past the seal rings 120 and past the cap or closure 121 which retains the piston assembly 110 in the piston housing 113, can be so low as to be essentially imperceptible or at least of no consequence. It has been found that upon occasion the reciprocating piston 118 which, like the piston housing 111, can be of a hard but brittle material such as alumina, can seize and crack from ingress of the aforementioned solid particles of hydrolysate.

As shown in Figure 3, a fluid inlet 122 can be provided in the upper region of the piston housing, below the end adjacent to the seals 120 and above the region which enters the pumping chamber 116. An extremely small quantity of inert fluid is forced into the region between the body of the reciprocating piston 118 and the interior walls 115 of the piston housing 111. It should be noted that the highly polished surfaces of the reciprocating piston 118 and the piston housing 111 effectively act as a seal. Consequently, the quantity of fluid pumped into the piston housing 111 through the fluid inlet 122 can be on the order of a few ounces per month. The critical factor is that the fluid pressure at the displacement or barrier fluid inlet 122 is greater than the fluid pressure in the piston chamber 116, so that there is a total absence of fluid flow from the piston chamber 116 to the region of the seal rings 120 and a minimum of flow from the fluid inlet 122 to the seal rings 120 and to the pumping chamber 116. The greater the pressure difference between the fluid inlet 122 and the piston chamber 116, the lower the risk of fluid being pumped migrating past the seals 120 to the exterior region 123 of the reciprocating piston 118, but the higher the consumption of barrier fluid and the contamination by the barrier fluid of the fluid being pumped. Although the barrier fluid inlet can include a plurality of ports, the desired result can be attained with a sngle port. In the event that a plurality of ports are used, it is essential that all of the ports serve as inlets and a continuous flow through inlets and outlets should be avoided since such an arrangement would dramatically increase the consumption of barrier fluid and would necessitate the disposal of barrier fluid contaminated with the fluid being pumped. In those instances where, for example, two inlet ports are used, both ports should be connected to a single source of barrier fluid.

In the case of the fluid being pumped being an organotin such as monobutyltin trichloride or anhydrous tin tetrachloride, the barrier fluid can be a non-detergent oil such as, a lubricating oil, or an organic solvent such as anhydrous methanol; or dry air. It is essential that the barrier fluid be compatible with the fluid being pumped, be present in such low concentration and/or have properties such that no adverse effects are noticed at the application end of the system. Where the pumped fluid is sulfuric anhydride, the barrier fluid can be silicone or fluorocarbon liquids or dry air. In the case of aqueous solutions of radioactive, pathogenic or toxic materials, the barrier fluid can be pure water. When pumping sulfur dioxide, hydrogen sulfide, or phosgene, hydrocarbon oils, air, as well as silicone or fluorocarbon liquids can be employed.

In the case of glass coating systems, the application temperature can be sufficiently high to vaporize the minor quantity of barrier fluid which mixes in the pumping chamber with the fluid being pumped, particularly since it has been found that as little as 1 cc of oil per day can prevent pump failure as compared to identical pumps also handling the same monobutyltin trichloride formulation, which failed in as little as two or three days. The ceramic to ceramic seal of the surfaces of the piston 118 and the interior wall 115 of the piston housing 111, in combination with the positive pressure of the barrier fluid over the fluid being pumped was found to prevent particle formation on the shaft 123 of the piston 118 and consequently provide for the failure free operation of the pump. The barrier fluid reservoir 134 is connected to a source of air at a pressure of about 20 psi in order to provide the required pressure differential.

Whilst the upper part of the piston 118 is cylindrical, the lower end 124 is hemicylindrical, as clearly seen in the drawings. Figures 4, 6 and 8 illustrate the positions of the reciprocating piston relative to the fluid inlet port 114 and the fluid outlet port 112 and the valving action produced during the pumping cycle. Figures 5, 7 and 9 illustrate the positions of the reciprocating piston relative to the pumping chamber 116 during the pumping cycle.

As illustrated in Figures 4 and 5, the piston 118 is at the highest point in its movement and the volume of the pumping chamber 116 is at the maximum. At this point in time the inlet port 114 is closed and the outlet port 112 is open. The reciprocating piston rotates as indicated by the arrow 174, during which time the piston also descends toward its lowermost position. The beginning of the transition between the discharge cycle and the suction cycle is illustrated in Figures 6 and 7.

At the end of the discharge portion of the cycle, the fluid inlet 114 opens and the fluid outlet closes. As illustrated in Figure 8, at the end of the suction cycle the continued rotation of the piston 118 in the direction indicated by the arrow 178, results in the closing of the fluid inlet and opening of the fluid outlet as illustrated in Figure 4. During the piston rotation, the piston also reciprocates, thereby increasing the available space in the pumping chamber during the suction cycle and decreasing the available fluid space during the discharge cycle. Control of the extent of travel of the reciprocating piston is achieved by adjustment of the micrometer 130 which serves to alter the angle between the center line of the motor 132 and the reciprocating piston 118, as well known in the art. The details of the control of the fluid flow rate by the angle adjustment are well known in the prior art and is not a part of the instant invention and consequently is not explained in detail in this disclosure.

Reference numerals have been inserted in the claims to comply with the implementing Regulations of the European Patent Convention, as interpreted by the European Patent Office. They are not intended to limit the scope of the claims, and should not be regarded as having this effect.

**Claims**

1. A pump (100) having
a piston housing (111), said piston housing having an elongated bore (115) extending from a first open end to a position proximate a second closed end, said elongated bore having a pumping chamber region (116) at said second end,

a pumping fluid inlet means (114) to said pumping chamber (116),

a pumping fluid outlet means (112) from said pumping chamber,

a reciprocating and rotating piston (118) said piston (118) being positioned for reciprocating motion within said elongated bore (115) of said piston housing (111), from a first position in which said piston (118) substantially occupies the space within said pumping chamber (116) and displaces pumped fluid from said pumping chamber to a second position in which said piston is substantially removed from said pumping chamber (116) and draws pumping fluid into said chamber,

at least one barrier fluid inlet (122) for providing communication between a source of barrier fluid and said elongated bore at a position which is between said elongated bore first end and said pumping chamber (116) and adjacent said piston (118),

pressure means for delivering said barrier fluid to said elongated bore (115) at a pressure which is greater than the maximum fluid pressure within said pumping chamber (116),

whereby migration of pumped fluid from said pumping chamber (116), along the piston (118), to said first open end is precluded by said barrier fluid, characterised by the fact that any conduit (122) leading into the elongated bore (115) and carrying barrier fluid is an inlet for barrier fluid and no seal lies between said inlet or inlets (115) and the pumping chamber (116).

2. The pump of claim 1, wherein the rotation of said piston (118) produces the required opening and closing of said pumped fluid inlet means (114) to said pumping chamber (116) and said pumped fluid outlet means (112) from said pumping chamber.

3. The pump of claim 1 or claim 2, further comprising a barrier fluid reservoir in fluid communication with said barrier fluid inlet means (122) and pressure means for maintaining said barrier fluid under a pressure greater than the fluid pressure developed in said pumping chamber (116).

4. An apparatus for delivering controlled quantities of steady stream of fluid to an application zone comprising:

a) a positive displacement pump (100) for producing uniform pulses of small quantities of said fluid and having a fluid inlet (114) and a fluid outlet (112);

said positive displacement pump (100) being a reciprocating pump according to claim 1 or claim 2;

b) a mixing chamber (160), having a first inlet (162) in communication with pumping fluid outlet, a second inlet (152) in communication with a source of dry air and an outlet (164);

c) a fluid application zone;

d) an elongated restricted flow conduit (165), having a first end in communication with said mixing chamber outlet and a second end (167) in communication with said fluid application zone,

whereby said fluid and said air transform from a pulsed flow at said flow conduit (165) first end to a steady flow at said second end.

5. The apparatus of claim 4, further comprising a barrier fluid reservoir (134) in fluid communication with said barrier fluid inlet means (122) and pressure means for maintaining said barrier fluid under a pressure greater than the fluid pressure developed in said pumping chamber (116).

6. The apparatus of claim 4 or claim 5 wherein a high pressure sensor (140) is provided upstream of said mixing chamber.

7. The apparatus of any of claims 4 to 6 wherein a low air-fluid mixture flow rate sensor is provided upstream of said mixing chamber.

**Patentansprüche**

1. Pumpe (100) mit

einem Kolbengehäuse (111), das eine langgestreckte Bohrung (115) aufweist, die sich von einem ersten offenen Ende zu einer Stellung nahe einem zweiten geschlossenen Ende erstreckt, wobei die genannte langgestreckte Bohrung einen Pumpenkamperbereich (116) an dem genannten zweiten Ende besitzt,

einem Pumpfluideinlaß (114) zur genannten Pumpenkammer (116),

einem Pumpfluidauslaß (112) von der genannten Pumpenkammer,

einem rotierenden Hubkolben (118), der für eine Hubbewegung innerhalb der genannten langgestreckten Bohrung (115) des genannten Kolbengehäuses (111) aus einer ersten Position, in der der genannte Kolben (118) im wesentlichen den Raum innerhalb der genannten Pumpenkammer (116) einnimmt und gepumptes Fluid aus der Kammer verdrängt, in eine zweite Position angeordnet ist, in der der genannte Kolben im wesentlichen aus der genannten Pumpenkammer (116) entfernt ist und Pumpfluid in die genannte Kammer hineinzieht,

wenigstens einem Sperrfluideinlaß (122) zur Herstellung einer Verbindung zwischen einer Sperrfluidquelle und der genannten langgstreckten Bohrung in einer Position, die sich zwischen dem ersten Ende der genannten langgestreckten Bohrung und der genannten Pumpenkammer (116) und angrenzend an den genannten Kolben (115) befindet,

einer Druckeinrichtung zum Befördern des genannten Sperrfluids zur genannten langgstreckten Bohrung (115) mit einem Druck, der höher ist als der maximale Fluiddruck innerhalb der genannten Pumpenkammer (116), wodurch das Wandern bzw. Migrieren von gepumptem Fluid von der genannten Pumpenkammer (116) entlang dem Kolben (118) zum genannten ersten offenen Ende durch das genannte Sperrfluid ausgeschlossen ist,

dadurch gekennzeichnet, daß jede Leitung (122), die in die langgestreckte Bohrung (115) mündet und Sperrfluid führt, eine Einlaßleitung für Sperrfluid ist und keine Dichtung zwischen dem genannten Einlaß oder den genannten Einlassen (115) und der Pumpenkammer (116) gelegen ist.

2. Pumpe nah Anspruch 1, worin die Rotation des genannten Kolbens (118) das erforderliche Öffnen und Schließen des genannten Pumpfluideinlasses (114) zur genannten Pumpenkammer (116) und des genannten Pumpfluidauslasses (112) aus der genannten Pumpenkammer bewirkt.

3. Pumpe nach Anspruch 1 oder 2, weiters umfassend einen Sperrfluidbehälter in Fluidverbindung mit dem genannten Sperrfluideinlaß (122) und eine Druckeinrichtung zum Halten des genannten Sperrfluids auf einem Druck, der höher ist als der in der genannten Pumpenkammer (116) entwickelte Druck des Fluides.

4. Vorrichtung zur Abgabe gesteuerter Mengen eines konstanten bzw. gleichmäßigen Fluidstromes an eine Anwendungszone, umfassend
   a) eine Verdrängerpumpe (100) zur Erzeugung gleichmäßiger Impulse von kleinen Mengen des genannten Fluids und mit einem Fluideinlaß (114) und einem Fluidauslaß (112), wobei die genannte Verdrängerpumpe (100) eine Hubkolbenpumpe nach Anspruch 1 oder 2 ist;
   b) eine Mischkammer (160) mit einem ersten Einlaß (162) in Verbindung mit dem Pumpfluidaus! auslaß, einen zweiten Einlaß (152) in Verbindung. mit einer Quelle von trockener Luft und einem Auslaß (164);
   c) eine Fluidanwendungszone;
   d) eine langgstreckte, verengte Durchflußleitung (165) mit einem ersten Ende, das in Verbindung mit dem genannten Mischkammerauslaß steht und einem zweiten Ende (167), das in Verbindung mit der genannten Fluidanwendungszone steht,
   wodurch das genannte Fluid und die genannte Luft sich von einem gepulsten Durchfluß am ersten Ende der genannten Durchflußleitung (165) in einen konstanten bzw. gleichmäßigen Durchfluß am genannten zweiten Ende umwandeln.

5. Vorrichtung nach Anspruch 4, weiters umfassend einen Sperrfluidbehälter (134) in Fluidverbindung mit dem genannten Sperrfluideinlaß (122) und eine Druckeinrichtung zum Halten des genannten Sperrfluids auf einem Druck, der höher ist als der in der genannten Pumpenkammer (116) entwickelte Druck des Fluides.

6. Vorrichtung nach Anspruch 4 oder 5, worin ein Hochdrucksensor (140) stromaufwärts von der genannten Mischkammer vorgesehen ist.

7. Vorrichtung nach einem der Ansprüche 4 bis 6, worin ein Sensor für eine geringe Durchflußrate des Luft-Fluid-Gemsiches stromaufwärts von der genannten Mischkammer vorgesehen ist.

**Revendications**

1. Pompe (100) ayant
un logement de piston (111), ledit logement de piston ayant un alésage allongé (115) s'étendent d'une première extrémité ouverte à une position proche d'une seconde extrémité fermée, ledit alésage allongé ayant une région de chambre de pompage (116) à ladite seconde extrémité,
   un moyen (114) d'entrée du fluide de pompage vers ladite chambre de pompage (116),
   un moyen (112) de sortie du fluide de pompage, de ladite chambre de pompage,
   un piston alternatif et rotatif (118),
   ledit piston (118) étant placé pour un mouvement alternatif dans ledit alésage allongé (115) dudit logement (111) du piston, d'une première position dans laquelle ledit piston (118) occupe sensiblement l'espace dans ladite chambre de pompage (116) et déplace le fluide pompé de ladite chambre de pompage à une seconde position dans laquelle ledit piston est sensiblement eloigné de ladite chambre de pompage (116) et attire le fluide de pompage dans ladite chambre.
   au moins une entrée de fluide de barrière (122) pour produire une communication entre une source de fluide de barrière de ledit alésage allongé en une position qui est entre la première extrémité dudit alésage allongé et ladite chambre de pompage (116) et adjacente audit piston (118),
   un moyen de pression pour fournir ledit fluide de barrière audit alésage allongé (115) à une pression qui est plus importante que la pression maximale du fluide dans ladite chambre de pompage (116),
   ainsi la migration du fluide pompé de ladite chambre de pompage (116), le long du piston (118), à ladite première extrémité ouverte est empéchée par ledit fluide de barrière, caractérisée par le fait que tout conduit (122) conduisant dans l'alésage allongé (115) et transportant le fluide de barrière est une entrée pour le fluide de barrière et qu'aucun joint ne se trouve entre ladite entrée ou lesdites entrées (115) et la chambre de pompage (116).

2. Pompe de la revendication 1, où la rotation dudit piston (118) produit l'ouverture et la fermeture requises dudit moyen d'entrée (114) du fluide pompé vers ladite chambre de pompage (116) et ledit moyen de sortie (112) du fluide pompé vers ladite chambre de pompage.

3. Pompe de la revendication 1 ou 2, comprenant de plus un réservoir de fluide de barrière en communication de fluide avec ledit moyen (122) d'entrée du fluide de barrière et un moyen de pression pour maintenir ledit fluide de barrière sous une pression plus importante que la pression du fluide développée dans ladite chambre de pompage (116).

4. Appareil pour fournir des quantités contrôlées d'un courant stable d'un fluide à une zone d'application comprenant,
   a) une pompe à déplacement positif (100) pour produire des impulsions uniformes de feibles quantités dudit fluide et ayant une entrée de fluide (114) et une sortie de fluide (112);
   ladite pompe à déplacement positif (100) étant une pompe alternative selon la revendication 1 ou la revendication 2;

b) une chambre de mélange (160) ayant une première entrée (162) en communication avec la sortie du fluide de pompage, une seconde entrée (152) en communication avec une source d'air sec et une sortie (164);

c) une zone d'application de fluide;

d) un conduit allongé d'écoulement restreint (165) ayant une première extrémité en communication avec ladite sortie de la chambre de mélange et une seconde extrémité (167) en communication avec ladite zone d'application du fluide,

ainsi ledit fluide et ledit air se transformant d'un écoulement pulsé à la première extrémité dudit conduit d'écoulement (165) à un écoulement stable à ladite seconde extrémité.

5. Appareil selon la revendication 4, comprenant de plus un réservoir (134) d'un fluide de barrière en communication de fluide avec ledit moyen d'entrée (122) du fluide de barrière et un moyen de pression pour maintenir ledit fluide de barrière sous une pression plus importante que la pression du fluide développée dans ladite chambre de pompage (116).

6. Appareil selon la revendication 4 ou 5 où un capteur de haute pression (140) est prévu en amont de ladite chambre de mélange.

7. Appareil selon l'une des revendications 4 à 6 où un capteur du débit du mélange air-fluide faible est prévu en amont de ladite chambre de mélange.

FIG. 3

120
118
122
110
124
115 116 111

162
140
160
152
164
150
AIR →
168
166
165
153
167

AIR →
134
132
123
112
100
114 131
130
125

FIG. 1

FIG. 2

FIG. 5

124

4

4

-116-

FIG. 7

124

6

6

124

FIG. 9

124

8

8

FIG. 4

114

174

112

FIG. 6

174

FIG. 8

174